# EUROPEAN PATENT APPLICATION

(11) **EP 2 372 622 A1**
(43) Date of publication of application: **05.10.2011**
(21) Application number: 11154071.2
(22) Date of filing: 10.02.2011
(51) Int. Cl.: G06Q 10/00, G06Q 30/00

(54) **Customisation of actions selectable by a user interface**

(30) Priority: 15.02.2010 GB 1002553
(71) Applicant: Sony Europe Limited, Brooklands Weybridge Surrey KT13 0XW (GB)
(72) Inventor: Coenen Pieter, 2500, Lier (BE); Lodeweyckx, Stefan, 3000, Leuven (BE); Piquepe, Pascal, 1560, Hoeilaart (BE); Van Aeken, Francis, 1000, Brussel (BE)
(74) Representative: Merryweather, Colin Henry

(57) **Abstract**

A user interface in a computer apparatus may be customized by connection of a removable storage medium device to a storage medium interface of the computer apparatus. It is detected whether, in the storage medium thereof, there is stored customisation data that includes icon data and target data in respect of additional icons for the user interface. If so, user interface data in the computer apparatus is changed to include the icon data and target data in respect of the additional icons.

## Description

The present invention relates to customization of a computer apparatus.

The development of software applications for a computer apparatus typically takes a considerable period of time, for example to write and test the software and to undergo approval processes. For example in the case of a computer apparatus that is a laptop being developed as a new commercial product, it might in practical terms take a period of several months for changes to a suite of software applications to be made. The significant work required increases costs thereby acting as a barrier to making such developments.

Furthermore, the lead-in time creates a lag in the commercialisation of new products that is not compatible with many commercial activities, particularly for products with a short commercial life cycle. For example in the case of computer apparatuses supplied as part of a package with a telecommunications provider for mobile internet services, the commercial life cycle products is typically very short, and may only a period of a few months. Being as this period is of the same order as the period required to develop software for the computer apparatus, this acts as a barrier to the software developments being made at all.

It would be desirable therefore to allow for customisation of aspects of a computer apparatus in a manner that may be implemented more simply and more quickly.

According to an aspect of the present invention, there is provided a method of customizing a user interface provided in a computer apparatus that comprises a storage medium interface to which a removable storage medium device that includes a storage medium is capable of connection,
the computer apparatus storing user interface data representing a user interface for display that allows actions to be selected,
the method being implemented by the computer apparatus and comprising:
displaying a user interface in accordance with the user interface data on a display device, accepting user-input selecting an action, and, in response to the user-input, performing the selected action; and
on connection of a removable storage medium device to said storage medium interface, detecting whether the storage medium of the removable storage medium device stores customisation data that identifies a change to actions that may be selected from the user interface, and, in response to detecting said customisation data, changing the user interface data in accordance with the customisation data.

Thus the present invention takes advantage of the fact that many computer apparatuses are supplied with a storage medium interface to which there is capable of connection a removable storage medium device that includes a storage medium. For example, a computer apparatus equipped for mobile telecommunications services might include a storage medium device that is a subscriber identity module card storing identification data that identifies a subscriber to a mobile telecommunications service.

That is to say, the present invention uses a storage medium device that is connected to the storage medium interface to perform the customisation. The storage medium of the storage medium device stores customisation data that specifies the nature of the customisation and the computer apparatus detects this customisation and changes the behaviour of the computer apparatus accordingly. In particular, the computer apparatus is customized by changing the actions that may be selected from a user interface provided by the computer apparatus.

The customisation of the behaviour of the computer apparatus can therefore be changed simply by provision of the customisation data on the storage medium device. Thus the customisation can be implemented in a simple manner in a quick time scale. This provides the advantage that the customisation may be applied in many commercial circumstances where the development time for new software applications is in practice prohibitive. For example, in the case of computer apparatuses to be supplied with a storage medium device that is a subscriber identity module card storing identification data that identifies a subscriber to a mobile telecommunications service, this allows the software apparatus to be customised in a manner desired by the provider of the mobile telecommunications service.

By way of example, the user interface may be implemented by a set of icons. In particular, the user interface data may include, in respect of each of a set of icons, icon data identifying the icon to be displayed and target data identifying an action to be performed on selection of the icon so that the set of icons may be displayed in accordance with the icon data in a container on the display device and user-input selecting a displayed icon may be accepted and an action is performed in accordance with the target data on selection of an icon. By way of example, the target data may specify a target object at a target location, the action to be performed on selection of the icon being to launch the object.

In the case that the user interface is implemented by a set of icons, then customisation data may include icon data and target data in respect of additional icons, so that customisation is achieved by changing the user interface data to include the icon data and target data in respect of the additional icons. This has the result of including the additional icons in the set of icons for display.

In the case that the user interface is implemented by a set of icons, then optionally:
the user interface data further includes, in respect of at least one of the set of icons, icon data identifying the icon to be displayed,
the step of displaying the set of icons comprises displaying the at least one icon in accordance with the icon data in respect thereof,
the step of detecting comprises detecting customisation data that further includes icon data in respect of the additional icons, and
the step of updating the user interface data comprises updating the user interface data to further include the icon data in respect of the additional icons.

In the case that the user interface is implemented by a set of icons, then optionally:
the user interface data further includes, in respect of at least one of the set of icons, text data representing text to be displayed in association with the icon,
the step of displaying the set of icons further comprises displaying text represented by the text data in association with the at least one icon,
the step of detecting comprises detecting customisation data that further includes text data in respect of the additional icons, and
the step of updating the user interface data comprises updating the user interface data to further include the text data in respect of the additional icons.

Optionally, the method further comprises detecting removal of said removable storage medium device from said storage medium interface, and in response to detecting said removal of said removable storage medium device, reversing said changing of the user interface data in accordance with the customisation data.

The customisation data may be stored in an XML file.

The detection of whether the storage medium of the removable storage medium device stores customisation data may comprise detecting whether the storage medium of the removable storage medium device stores customisation data in a predetermined location, for example the root directory of the storage medium.

The method may advantageously be applied to a storage medium that is a subscriber identity module card storing identification data that identifies a subscriber to a mobile telecommunications service.

According to further aspects of the present invention, there are provided a computer program capable of implementing a similar method, a computer apparatus on which a similar method is implemented and a storage medium device capable of use with such a method or computer apparatus.

Embodiments of the present invention will now be described by way of non-limitative example with reference to the accompanying drawings, in which:
Fig. 1 is a diagram of a computer apparatus;
Figs. 2 to 4 are schematic diagrams of the computer apparatus illustrating customisation of applications;
Fig. 5 is a diagram illustrating customisation by an application;
Fig. 6 is a diagram illustrating customisation by a helper process;
Fig. 7 is a flow chart of the steps performed in the customisation;
Fig. 8 is a flow chart of the steps performed in reversing the customisation; and
Fig. 9 is a view of the top part of a screen of the display device on which the VAIO Gate container is displayed.

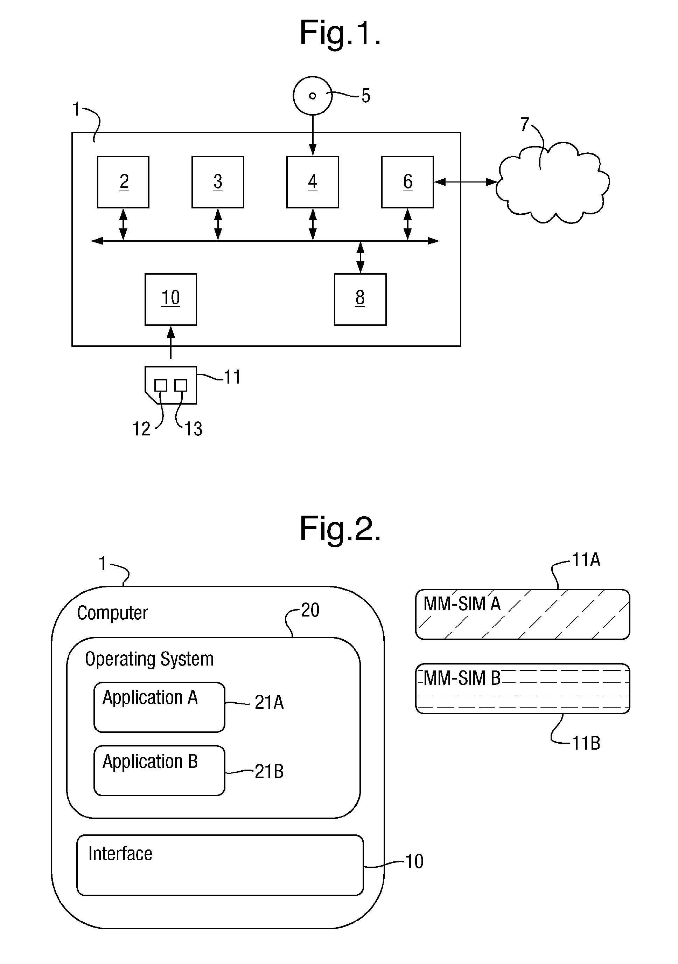

There will now be described an embodiment of the present invention that may be implemented in a computer apparatus 1 as shown in Fig. 1. The computer apparatus 1 may be a personal computer of a conventional type and includes a processor 2, a memory 3, a drive 4 for reading a recording medium 5 such as a CD or DVD, and a network interface 6 for connecting the computer apparatus 1 to a network 7 that may be a mobile telecommunications network allowing connection to the internet. The computer apparatus 1 also includes a display device 8.

The invention may equally be applied to a computer apparatus 1 of any other type besides a personal computer. Non-limitative examples of other types of computer apparatus include a mobile telephone, or any network connected entertainment devices such as a personal media players for video and/or music or e-book devices.

Applications for the computer apparatus 1 may be stored on a storage medium, for example the memory 3, or the recording medium 5 for subsequent installation in the computer apparatus 1. Applications installed in the computer apparatus 1 and stored in the memory 3 are executed by the processor 2 thereby causing the computer apparatus 1 to operate in accordance with the application.

The computer apparatus 1 further comprises an MM-SIM card interface 10 to which an MM-SIM card 11 may be removably connected. SIM stands for "subscriber identity module". The MM-SIM card stores identification data that identifies a subscriber to a mobile telecommunications service. This is used to allow the computer apparatus 1 access to the mobile telecommunications service over the network 7. MM stands for "multimedia". An MM-SIM card 11 is a normal SIM card extended with a ROM 12 and RAM 13 that act as storage mediums, being USB mass-storage devices. Thus the MM-SIM card 11 is an example of a storage medium device. The invention may equally be applied to a storage medium device 11 of any other type that may be connected by any suitable storage medium device. Non-limitative examples of other types of storage medium device include USB memory devices connected by a USB interface, memory cards connected by a memory card interface, or memory units of portable devices such as mobile telephones. Another example is that the storage medium device 11 is itself a computer apparatus, for example a mobile telephone that connects to the computer apparatus 1 for example by a USB interface. In this case, the storage medium on which the customisation data is stored may be a memory (fixed or removable) of the mobile telephone that forms the storage medium device 11, and the customisation data may be transferred to the mobile phone by any conventional means, for example Bluetooth, a physical network connection, data connection via a telecommunication network, messaging service, or indeed by transfer of an MM-SIM card to the mobile telephone.

To perform customisation the MM-SIM card 11 stores customisation data that may be stored in a structured data format, for example in an XML file of a specific format, though any suitable data format could be used. The customisation data is stored at a predetermined location in the ROM 12 or RAM 13, that is at a specific path preferably in the root directory to facilitate detection thereof.

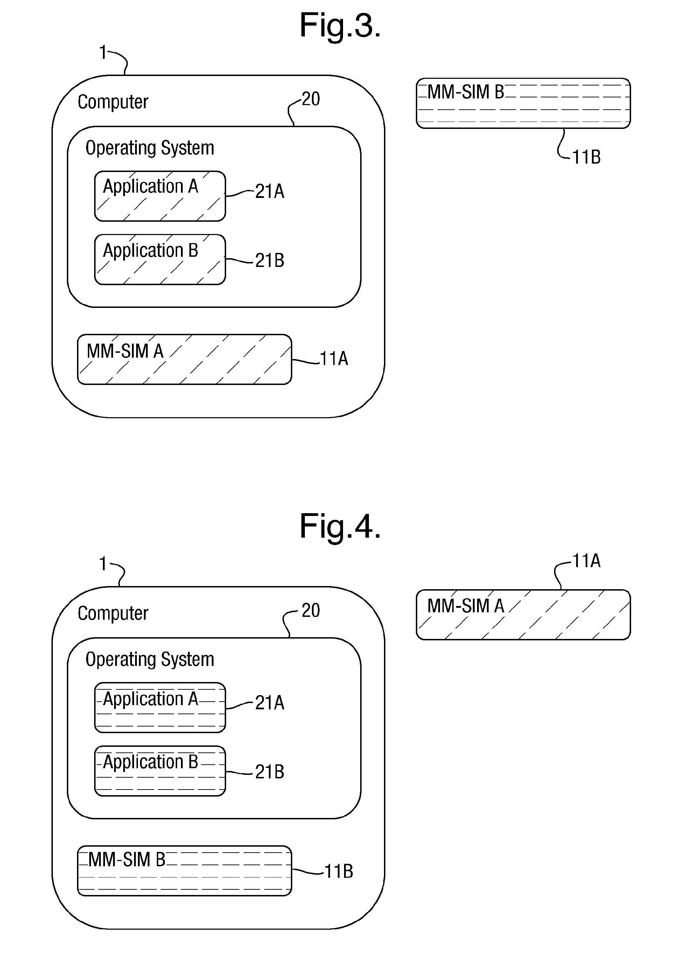

On connection of an MM-SIM card 11 to the MM-SIM card interface 10, one or more applications installed in the computer apparatus 1 may be automatically customised in accordance with customisation data stored on the MM-SIM card 11, as shown schematically in Figs. 2 to 4. Fig. 2 illustrates the computer apparatus 1 and two applications 21A and 21B that are executable under the operating system 20 of the computer apparatus 1. Fig. 2 also illustrates two MM-SIM cards 11A and 11B, shown schematically with diagonal and horizontal shading, that may be connected to the MM-SIM card interface 10. Fig. 3 illustrates the case that the first MM-SIM card 11A is connected, in which case the applications 21A and 21B are customised thereby, as shown schematically by the diagonal shading thereof. Similarly, Fig. 4 illustrates the case that the second MM-SIM card 11 B is connected, in which case the applications 21 A and 21B are customised thereby, as shown schematically by the horizontal shading thereof.

If plural MM-SIM cards 11, for example both MM-SIM card 11A and MM-SIM card 11B are connected, then the computer apparatus may be customised by one of the MM-SIM cards 11, for example the first or most recently detected MM-SIM card 11.

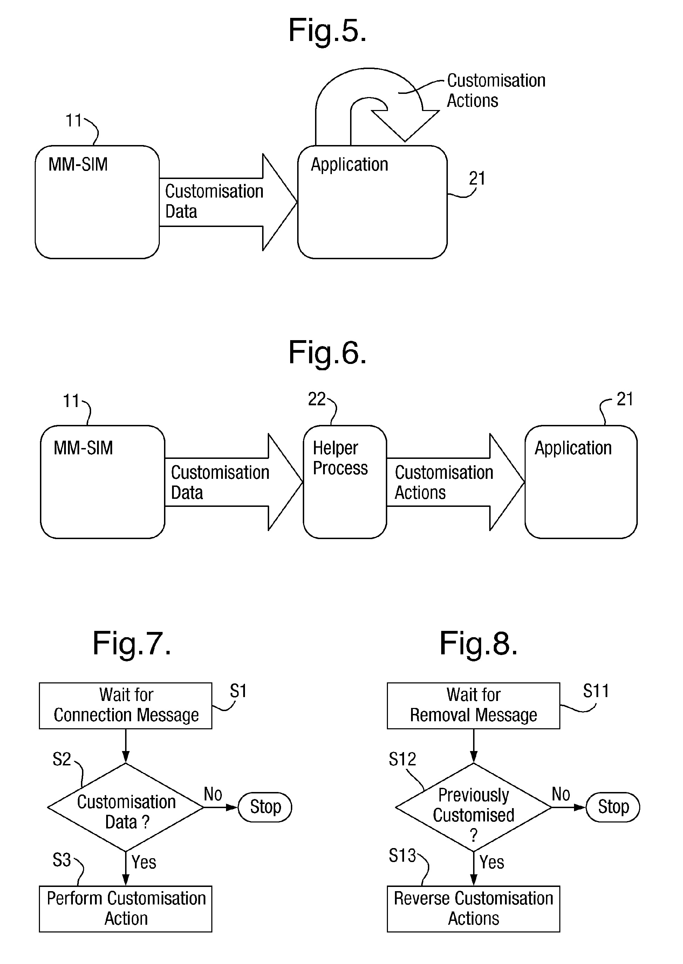

As shown schematically in Fig. 5, the customisation may occur by the application 21 itself detecting the customisation data and taking actions to customise itself. Alternatively, as shown schematically in Fig. 6, the customisation may be performed by a separate helper process 22, being itself an application executed by the processor 2 that is associated with the application 21. In this case, the helper process 22 detects the customisation data and takes actions to customise the application 21.

The process performed by the application 21 or helper process 22 to perform the customisation is shown in Fig. 7. In step S 1, there is awaited a message from the operating system 20 that a MM-SIM card 11 has been connected to the MM-SIM card interface 10. In step S2, it is detected whether the MM-SIM card 11 stores customisation data in the predetermined location. If not then the process stops, but if customisation data is detected then in step S3, the customisation actions are performed to customise the application 21.

Optionally, the customisation may be reversed on removal of the MM-SIM card 11, again by either the application 21 or helper process 22. The process performed is shown in Fig. 8. In step S11, there is awaited a message from the operating system 20 that the MM-SIM card 11 has been removed from the MM-SIM card interface 10. In step S12, it is determined whether the application 21 was previously customised in accordance with customisation data stored on the MM-SIM card 11. If not then the process stops, but if so then in step S 13, actions are performed to reverse the customisation of the application 21. This causes the application 21 to revert to a default configuration. This may be achieved by reverting to a copy of the customisation data that has been cached locally on the computer apparatus 1 during the initial customisation.

In accordance with a general aspect of the invention, there may be provided a method of customizing an application in a computer apparatus that comprises a storage medium interface to which a removable storage medium device that includes a storage medium is capable of connection, the method comprising:
on connection of a removable storage medium device to said storage medium interface, detecting whether there is stored in the storage medium of the removable storage medium device customisation data that specifies a change in the behaviour of the application;
in response to detecting said customisation data, changing the behaviour of the application in accordance with the customisation data.

There will now be described a specific example of an application 21 and the customisation that may be effected.

In this example, the application 21 is called VAIO Gate and provides a user interface to the computer apparatus 1. In particular, VAIO Gate is an application launcher and notification system that operates under a Windows operating system, for example Windows 7, and is continuously present on the Windows desktop. For Windows 7, VAIO Gate implements a clean desktop policy to replace the set of icons that were pre-installed on the desktop in previous operating systems, and operates as follows.

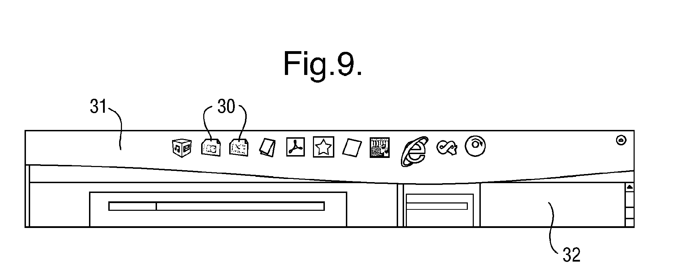

In particular, as shown in Fig. 9, VAIO Gate displays a set of icons 30 in a container 31 that may be positioned ("docked") on the edge of a screen 32 of the display device, typically the top edge as shown in Fig. 9. The container 31 may be shown when a pointer hovers over a region close to the edge where the container 31 1 is docked, but hidden otherwise.

VAIO Gate stores user interface data that includes, in respect of each icon 30 in the set, target data, icon data and text data.

The target data specifies a target object at a target location.

The icon data identifies the icon 30 to be displayed in the container 30, for example by specifying the path of an image file for the icon 30. The icon data is optional. If icon data is not present in respect of an icon, a default icon is displayed, for example selected in accordance with the file type of the target object, or in accordance with the application used to launch the target object

The text data represents text to be displayed in association with the icon 30. In principle, the text data is optional and may be omitted. The text data includes caption data that represents text that is displayed in a caption below the icon 30 and tip data that represents text that is displayed in tooltip container when a pointer hovers over the icon 30.

VAIO Gate accepts user-input that selects any one of the displayed icons 30. In response to such selection of a displayed icon 30, VAIO Gate performs the action in accordance with the target data, in particular launching the target object specified by the target data. The target object may be of various different types, for example as follows.

The target object may be an executable file that contains an executable program. In this case, launching of the target object consists of executing the program.

The target object may be a document file containing a document that is rendered by an application. In this case, launching of the target object consists of opening the application and rendering the document.

The target object may be a web page at a location on a network. In this case, launching of the target object consists of launching a browser and opening the webpage. The web page, being for example in HTML format, may be considered as a special case of a document file.

The target object may be a folder in the file system of the computer apparatus 1. In this case, launching of the target object consists of opening the folder.

VAIO Gate also periodically displays notifications in the container 31, in place of the icons 31. The notifications are displayed at periodic intervals, even if the container 31 is previously hidden. The notifications may be: text, an image, a video clip, an icon that may be selected to perform an action; or a hyperlink. The notifications may serve to provide advertisements, notifications from other applications or messages from RSS feeds.

In step S3, VAIO Gate is customised by including additional icons 30 in the set of icons displayed in the container 31, thereby allowing additional actions to be performed on selection of the additional icons 30. This is achieved by changing the user interface data in accordance with the customisation data. In particular, the customisation data includes target data, and optionally icon data and text data, in respect of each of the additional icons that is added to the existing user interface data. The inclusion of this additional data in the user interface data causes VAIO Gate to include the additional icons 30 when it displays the set of icons 30 based on the user interface data. This allows the additional icons 30 to be selected.

The additional icons 30 may be locked in VAIO Gate, meaning that the user cannot move them or drag them out of the container 31.

To achieve this, the customisation data may be arranged as an XML file, as follows.

The XML file is called VAIOGate.xml. The root element of the XML file is named "VAIOGate". It must have an attribute "Operator" specifying the operator. It must also have an attribute "Version" that must have the value "1.0".

In step S2, it is determined whether this file called VAIOGate.xml exists at the predetermined location in root directory of the ROM 12 or RAM 13 of an MM-SIM 11, and if so whether it includes the customisation data specified below.

The "VAIOGate" element contains a single "Items" element. This element can contain zero or more "Item" elements.

The "Item" element must have an attribute "Type" that must have the value "Application" or "Url", depending on whether the target is an application or a URL respectively.

Each "Item" element can contain the elements indicated in the following table.

| Name | Description | Example |
|---|---|---|
| Id | A string uniquely identifying the item. This is typically, but not necessarily, a string representation of a GUID, formatted as 12345678-1234-1234-1234-123456789012. | C636E030-4895-4298-89FC-D210FF58C69B |
| Text | The caption data of the icon. If the content of this element is a string, then this string is the default text, valid for all language-regions. Alternatively, the content is a sequence of "Text" elements having an attribute "Type" specifying the language-region that the text applies to. | Orange |
| Tip | The tip data representing a tooltip associated with the icon. If the content of this element is a string, then this string is the default text, valid for all language-regions. Alternatively, the content is a sequence of "Text" elements having an attribute "Type" specifying the language-region that the text applies to. | Your favorite operator |
| Target | The target data that specifies a target object at a target location. If a path is specified and the path is relative, then the path refers to a location in the ROM 12 or RAM 13 on the MM-SIM card 11, starting from its root. | %ProgramFiles%\Orange\C onnectionManager.exe |
| Icon | The icon data that identifies an icon to be displayed, by providing a path for the icon. The extension can be .ico or .png. If the path is relative, then the path refers to a location in the ROM 12 on the MM-SIM card 11, starting from its root. This element is optional. | VAIOGate\Icon.ico |
| SupportTouch | Whether touch must be supported. | false |
| SupportRemocon | Whether the remote control must be supported. | false |
| WorkDirectory | The working directory to use when the item is clicked. If the path is relative, then the path refers to a location in the ROM 12 or RAM 13 on the MM-SIM card 11, starting from its root. This element is optional. | %ProgramFiles%\Orange |
| Parameters | The parameters to use when the icon is selected. This element is optional. | /p1 /p2 |

In step S3, the overall set of user interface data is changed to include in the user interface data these elements in respect of each additional icon taken from the MM-SIM 11.

Optionally, other types of customisation of an application 21 may additionally be performed on the basis of the customisation data.

## Claims

1. A method of customizing a user interface provided in a computer apparatus that comprises a storage medium interface to which a removable storage medium device that includes a storage medium is capable of connection,
the computer apparatus storing user interface data representing a user interface for display that allows actions to be selected,
the method being implemented by the computer apparatus and comprising:
displaying a user interface in accordance with the user interface data on a display device, accepting user-input selecting an action, and, in response to the user-input, performing the selected action; and
on connection of a removable storage medium device to said storage medium interface, detecting whether the storage medium of the removable storage medium device stores customisation data that identifies a change to actions that may be selected from the user interface, and, in response to detecting said customisation data, changing the user interface data in accordance with the customisation data.

2. A method according to claim 1, wherein
the user interface data includes, in respect of each of a set of icons, target data identifying an action to be performed on selection of the icon,
the step of displaying a user interface comprises displaying the set of icons in accordance with the user interface data in a container on the display device;
the step of accepting user-input comprises accepting user-input selecting a displayed icon,
the step of performing an action comprises, in response to selection of a displayed icon, performing an action in accordance with the target data,
the step of detecting customisation data comprises detecting customisation data that includes target data in respect of additional icons,
the step of changing the user interface data comprises changing the user interface data to include the target data in respect of the additional icons so as to include the additional icons in the set of icons for display.

3. A method according to claim 1 or 2, wherein said target data specifies a target object at a target location, the action to be performed on selection of the icon being to launch the object.

4. A method according to any one of the preceding claims, further comprising:
detecting removal of said removable storage medium device from said storage medium interface; and
in response to detecting said removal of said removable storage medium device, reversing said changing of the user interface data in accordance with the customisation data.

5. A method according to any one of the preceding claims, wherein the step of detecting whether the storage medium of the removable storage medium device stores customisation data comprises detecting whether the storage medium of the removable storage medium device stores customisation data in a predetermined location, optionally being the root directory of the storage medium.

6. A method according to any one of the preceding claims, wherein the storage medium is a subscriber identity module card storing identification data that identifies a subscriber to a mobile telecommunications service.

7. A computer program capable of execution by a computer apparatus and arranged on execution to cause the computer apparatus to perform a method according to any one of the preceding claims.

8. A storage medium storing a computer program according to claim 7.

9. A computer apparatus comprising a processor and a storage medium interface to which a removable storage medium device that includes a storage medium is capable of connection, the computer apparatus storing user interface data representing a user interface for display that allows actions to be selected, and the processor being arranged to display a user interface in accordance with the user interface data on a display device, to accept user-input selecting an action, and, in response to the user-input, performing the selected action,
wherein the processor is further arranged, on connection of a removable storage medium device to said storage medium interface, to detect whether the storage medium of the removable storage medium device stores customisation data that identifies a change to actions that may be selected from the user interface, and, in response to detecting said customisation data, to change the user interface data in accordance with the customisation data.

10. A computer apparatus according to claim 9, wherein
the user interface data includes, in respect of each of a set of icons, target data identifying an action to be performed on selection of the icon,
the user interface that the processor is arranged to display comprises the set of icons in accordance with the user interface data in a container on the display device;
the user-input that the processor is arranged to accept comprises user-input selecting a displayed icon,
the action that the processor is arranged to perform comprises, in response to selection of a displayed icon, performing an action in accordance with the target data,
the customisation data that the processor is arranged to detect comprises customisation data that includes target data in respect of additional icons,
the changing of the user interface data that the processor is arranged to perform comprises changing the user interface data to include the target data in respect of the additional icons so as to include the additional icons in the set of icons for display.

11. A computer apparatus according to claim 9 or 10, wherein said target data specifies a target object at a target location, the action to be performed on selection of the icon being to launch the object.

12. A computer apparatus according to any one of claims 9 to 11, wherein the processor is further arranged to detect removal of said removable storage medium device from said storage medium interface, and, in response to detecting said removal of said removable storage medium device, to reverse the change of the user interface data in accordance with the customisation data.

13. A computer apparatus according to any one of claims 9 to 12, wherein the processor is arranged to detect whether the storage medium of the removable storage medium device stores customisation data in a predetermined location, optionally being the root directory of the storage medium.

14. A computer apparatus according to any one of claims 9 to 13, wherein the storage medium is a subscriber identity module card storing identification data that identifies a subscriber to a mobile telecommunications service.

15. A storage medium device that includes a storage medium and is capable of being removably connected to a computer apparatus, the storage medium being stored thereon customisation data that identifies a change to actions that may be selected from a user interface that is provided by the computer apparatus.
